# EUROPÄISCHE PATENTSCHRIFT

(11) **EP 2 453 254 B1**
(45) Veröffentlichungstag und Bekanntmachung des Hinweises auf die Patenterteilung: **16.01.2013**
(21) Anmeldenummer: 10014616.6
(22) Anmeldetag: 15.11.2010
(51) Int. Cl.: F16M 11/06, F16P 3/14, G01S 7/497, G01S 17/89, G01S 7/481, G01S 17/02, G01S 17/88, E05B 15/00, F16M 13/02, E05F 15/00

(54) **Vorrichtung zur Überwachung einer Tür mit einem 3-D-Sensor**
Device for monitoring a door with a 3D sensor
Dispositif de surveillance d'une porte doté d'un capteur 3D

(43) Veröffentlichungstag der Anmeldung: 16.05.2012
(73) Patentinhaber: Cedes AG, 7302 Landquart (CH)
(72) Erfinder: Beat De Coi, 7320 Sargans (CH)
(74) Vertreter: Otten, Roth, Dobler & Partner

(56) Entgegenhaltungen:
- WO-A1-2010/018009
- DE-A1- 19 833 157
- DE-A1-102007 051 133
- US-A1- 2006 047 471
- US-B1- 6 467 745
- KAHLMANN T ET AL: "Calibration of the fast range imaging camera SwissRanger(TM) for the use in the surveillance of the environment", PROCEEDINGS OF SPIE, SPIE, USA, Bd. 6396, 1. Januar 2006 (2006-01-01), Seiten 639605-1, XP002539116, ISSN: 0277-786X, DOI: DOI:10.1117/12.684458

## Beschreibung

Die Erfindung betrifft eine Vorrichtung zur Überwachung einer Tür mit einem 3-D-Sensor nach dem Anspruch 1.

Automatische Flügel und Karusselltüren können für Benutzer gefährlich werden, falls deren Gefahrenbereiche vor dem Türblatt nicht überwacht sind. Da sich die gefahrbringenden Komponenten während des Öffnungs- und Schließprozesses bewegen, bewegt sich auch das zu überwachende Gefahrenfeld mit. Des Weiteren muss sich das zu überwachende Feld in der Größe während der Bewegung ggf. verändern. Dadurch entsteht das Bedürfnis, den Überwachungssensor mit der gefahrbringenden Komponente mit zu bewegen, wobei eine Anpassung an die breite Vielfalt von unterschiedlichen Türgrößen und benötigten Überwachungsfeldern erwünscht ist. Wirtschaftliche Faktoren verlangen weiterhin, dass ein universeller Sensor mit einfach anzupassenden Überwachungseigenschaften bereitgestellt wird.

Aufgrund der gegebenen Anforderungen sucht die Branche nach Sensorlösungen mit flexiblen Auswertemöglichkeiten, welche beispielsweise eine Auswertung der dritten Dimension, welche die Distanz des überwachten Objekts vom Sensor betrifft, realisiert werden. Derartige Sensoren können auch zur statischen Montage für Überwachungsanwendungen bestimmter Überwachungsfelder eingesetzt werden.

Aus dem Stand der Technik sind aktiv-infrarot Sensoren bekannt, welche an einem Türblatt montiert werden und den Bereich vor der Türebene an wenigen Punkten überwachen. Alternativ hierzu sind Lasersensoren bekannt, welche mittels über Rotationsmechaniken bewegten Strahlen den Überwachungsbereich abscannen. Derartige Sensoren sind jedoch sehr komplex und daher mit erheblichen Herstellungskosten verbunden. Außerdem bieten diese Sensoren einen wesentlich eingeschränkten Komfort bei der Installation und Anpassung an den überwachungsbereich, da eine Vielzahl von optischen Komponenten justiert werden müssen.

Vorrichtungen gemäss dem Oberbegriff des Anspruchs 1 sind aus WO-A-2010/018009, bzw, US-A-2006/047471 bekannt.

Aufgabe der Erfindung ist es daher, eine Vorrichtung zur Überwachung einer Tür mit einem 3-D-Sensor bereitzustellen, welche bei vertretbaren Kosten den Montage- und/oder Installationskomfort gegenüber dem Stand der Technik verbessert.

Ausgehend vom Oberbegriff des Anspruchs 1 wird diese Erfindung durch die kennzeichnenden Merkmale des Anspruchs 1 gelöst. Vorteilhafte Weiterbildungen sowie zweckmäßige Ausgestaltungen sind den abhängigen Ansprüchen gekennzeichnet.

Ziel der Erfindung ist es, einen universellen Überwachungssensor für automatische Türen (Karussell- und Flügeltüren) zu entwickeln. Der zu überwachende Bereich soll dabei einfach und schnell der entsprechenden Applikation und Montageposition angepasst werden. Durch die Verwendung des TOF-Prinzips (Time-of-Flight) kann die Distanz eines Objekts im Überwachungsfeld als dritte Dimension bestimmt werden. Dadurch ist es möglich, nicht nur eine genau definierte Fläche zu überwachen, sondern mittels Kenntnis der Umgebungsbedingungen des Sensors diesen auf ein genau definiertes Überwachungsvolumen einzustellen. Der Sensor besteht dabei vorzugsweise aus einer kompakten Einheit, welche zugleich Sender und Empfänger beinhaltet. Im ersten Schritt wird die zu überwachende Szenerie mittels z. B. LEDs beleuchtet. Das ausgesendete Licht wird reflektiert und gelangt zurück in den Sensor, wo es mittels der Empfangseinheit detektiert wird. Der Empfangsteil besteht aus einem TOF-Chip mit mehreren Pixel. Jeder Pixel kann einen von einem Objekt reflektierten Messstrahl empfangen. Zum Beispiel wird moduliertes IR-Licht eingesetzt. Zur Abstandsbestimmung kann eine Phasenverschiebung zwischen empfangenem Signal und ausgesandtem Signal ausgewertet werden. Durch die entsprechende Auswertung resultiert ein Distanzwert für jedes Pixel, wodurch ein dreidimensionales/volumenmäßiges Erfassungsbild erzielt wird. Die Optik ist so ausgelegt, dass die Beleuchtung in einzelne diskrete Strahlen gebündelt bleibt, was zu entsprechenden Spots mit einer hohen Lichtintensität führt.

Die Verwendung eines 3-D-Sensors für die Überwachung ermöglicht mehr Flexibilität bei der applikationsspezifischen Anwendung. Der Sensor liefert z. B. ortsabhängig (in der x-y-Ebene bzw. der Ebene senkrecht zur Sensorachse) die Distanzwerte zum Objekt. Bei 2-D-Sensoren ist lediglich die Aussage möglich, ob sich innerhalb des betrachteten Strahles ein Objekt befindet. Die Position des Objekts ist nicht auflösbar. Beim TOF-Prinzip kann man aber auch die Distanz zur Auswertung verwenden, wodurch sich neue Möglichkeiten bei der intelligenten Auswertung dieser Signale ergeben.

Bei einer Vorrichtung zur Überwachung einer Tür mit einem 3-D-Sensor, der in der Lage ist, Distanzen zu einem Objekt im Überwachungsfeld als dritte Dimension zu erfassen, wobei der 3-D-Sensor in einem Gehäuse angeordnet ist und wobei im Gehäuse unbeweglich angeordnete Sendemittel zum Senden eines Messstrahls und Empfängermittel.zum Empfangen des reflektierten Messstrahls vorgesehen sind, liegt ein Aspekt der Erfindung darin, dass eine Steuereinheit vorgesehen ist, die dazu ausgelegt ist, Informationen über die Lage der Vorrichtung zu erhalten, und dass eine Auswertung des Messstrahls durch die Steuereinheit in Abhängigkeit einer Lageinformation stattfindet. Dadurch lässt sich die Montage einer Überwachungsvorrichtung vereinfachen und zuverlässiger gestalten. Denn mit einer Lageinformation kann die Vorrichtung nach einer Montage erfasste Messstrahlen eindeutig der Umgebung zuordnen und somit auch richtig auswerten. Darüber hinaus ist.es möglich, dass sich nach der Montage die Vorrichtung sozusagen selber justiert. Zum Beispiel ist die Steuereinheit dazu ausgelegt, durch die Auswertung des Messstrahls in Abhängigkeit der Lageinformation eine Montagehöhe der Vorrichtung nach einer Montage zu bestimmten. Es ist damit nicht mehr erforderlich für eine Kalibrierung der Vorrichtung eine Montagehöhe einzugeben.

In einer bevorzugten Ausgestaltung der Erfindung ist die Steuereinheit weiter dazu ausgelegt, eine Höhe des Montageortes als Parameter für eine Definition des überwachungsfeldes einzusetzen. Um eine vollständige Definition des Überwach-angsfeldes vornehmen zu können, ist es bei üblichen Flügeltüren dann lediglich noch notwendig die Breite des Überwachungsfeldes anzugeben. Damit lassen sich Montage- und Eingabefehler minimieren.

Um auch eine Automatisierung einer Lageermittlung und Weiterleitung an die Steuereinheit zu ermöglichen, wird im Weiteren vorgeschlagen, das Lageerkennungsmittel vorhanden sind, die derart ausgebildet sind, eine Lage, insbesondere absolute Lage in Bezug auf eine Horizontale des Gehäuses automatisch zu erfassen und an eine Steuereinheit weiterzuleiten. Für eine umfassende Erfassung der Lage der Vorrichtung kann z. B. ein Neigungssensor vorgesehen sein. Denkbar ist auch, dass Lageinformationen z. B. über Eingabeelemente, wie z. B. DIP-Switches der Steuereinheit zur Verfügung gestellt werden.

Außerdem möglich ist die Erfassung einer Position zu einer vormontierten Grundplatte in automatischer Form, z. B. über Sensormittel, wie Schaltelemente.

Denkbar ist jedoch auch eine möglichst fehlerfreie Montage über geeignet ausgebildete Montagemittel zu erreichen. Zum Beispiel ist die Vorrichtung für eine Anbringung in einer horizontalen Grundmontageposition und für die Anbringung in wenigstens zwei weiteren unterschiedlichen Montagepositionen bezogen auf die horizontale Grundmontageposition ausgelegt, wobei Montagemittel für das Gehäuse für eine immer gleiche Montageausrichtung unabhängig von der Montageposition des Gehäuses ausgebildet sind, und wobei die Montagemittel und das Gehäuse derart aufeinander abgestimmt sind, dass eine eindeutige Ausrichtung des Gehäuses an den Montagemitteln in den jeweils wenigstens zwei weiteren Montagepositionen durch die Montagemittel vorgesehen ist.

Eine Vorgabe einer Grundposition und mindestens zwei weiteren Montagepositionen, welche als definierte Positionen vorliegen, vereinfachen einem Installateur die Montage und Ausrichtung eines entsprechenden 3-D-Seneor5 erheblich, wodurch Positionierungsfehler und dadurch resultierende Fehlfunktionen vermieden werden.

Um eine Montage noch zuverlässiger zu gestalten, wird überdies vorgeschlagen, dass die wenigstens zwei weiteren Montagepositionen eine Anordnung der Vorrichtung in einem Eckbereich einer zu überwachenden Tür betreffen, wobei die Montagemittel eine verkippte Anbringung des Gehäuses für den Eckbereich mit einer Ausrichtung des 3-D-Sensors zur überwachenden Tür nur so zulassen, dass ein begrenzender überwachungsstrahl eines überwachungsfeldes zumindest annähernd parallel zu einer Türkante der zu überwachenden Tür verläuft. Es sind in diesem Zusammenhang nur drei Montagepositionen des Gehäuses zugelassen. Damit lassen sich Montagefehler bei einer richtigen, immer gleichen Montage mit Montagemittel für die drei Positionen ausschließen.

Zur Realisierung einer einfachen Anbringung des Gehäuses der Vorrichtung an den Montagemitteln ist es im Weiteren bevorzugt, wenn die Montagemittel einen Rahmen umfassen, der das Gehäuse umschließt. Dieser Rahmen ist z. B. als Bügel ausgestaltet, der über die Front des Gehäuses und die Seitenwände des Gehäuses zu den Montagemitteln verläuft.

Um eine hohe Auflösung des 3-D-Sensors zu erreichen, wird darüber hinaus vorgeschlagen, dass der 3-D-Sensor in einem Gehäuses ein Enpfängerfeld und/oder ein Sensorfeld umfasst. Mit einem Empfängerfeld lassen sich viele Measstrahlen insbesondere gleichzeitig auswerten, wobei mit einem Senderfeld eine vergleichsweise große Fläche, insbesondere mit mehreren Messstrahlen, abtastbar ist.

Insbesondere wird eine Sendermatrix und eine Empfängermatrix eingesetzt.

Um eine zuverlässige Objektdetektion und Auswertung zu realisieren, ist es darüber hinaus bevorzug, wenn der 3-D-Senosor ein bildgebender Sensor ist, bei welchem ein Objektpunkt auf einem zugeordneten Sensorpunkt abgebildet wird.

Im Rahmen des Ausführungsbeispiels zeigen
Figur 1a ein montierter 3-D-Sensor in der Grundmontageposition;
Figur 1b Explosionsdarstellung des Sensorgehäuses und der Vorrichtung für eine Anbringung des Sensors;
Figur 2a Frontansicht der Grundmontageposition nach Figur 1a;
Figur 2b erste weitere Montageposition;
Figur 2c zweite weitere Montageposition;
Figur 3a Vorrichtung zur Anbringung im geschlossenen Zustand;
Figur 3b Vorrichtung zur Anbringung im geöffneten Zustand;
Figur 4 rückseitige Darstellung der Vorrichtung zur Anbringung sowie des 3-D-Sensors;
Figur 5 Frontansicht des 3-D-Sensors ohne Anbringungsvorrichtung;
Figur 6 exemplarische Darstellung einer Montageposition.

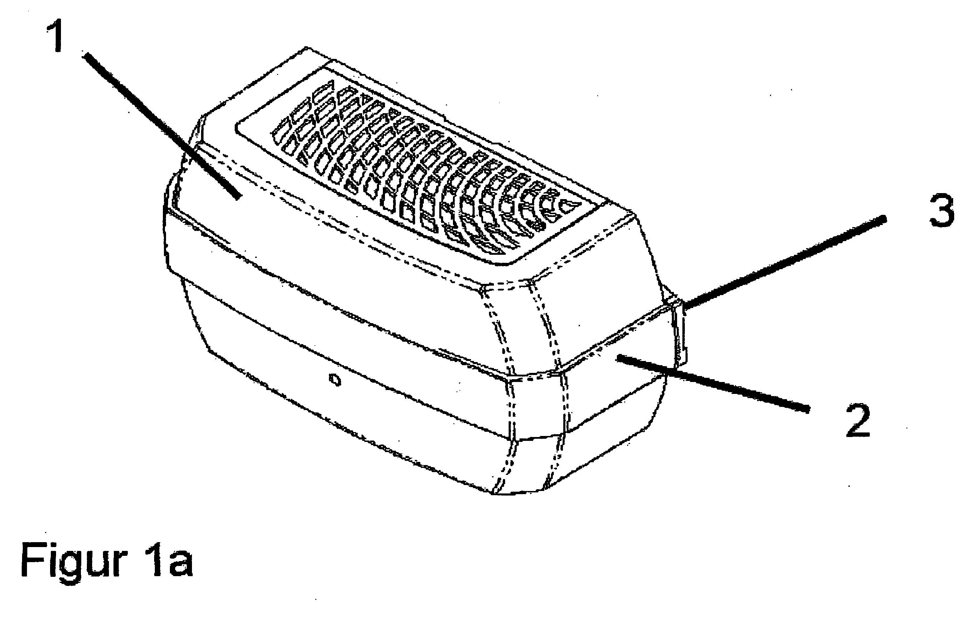

Im Einzelnen zeigt Figur 1a eine Darstellung eines Gehäuses 1 für eine erfindungsgemäße Vorrichtung zur Überwachung einer

Tür. Das Gehäuse 1 ist zumindest teilweise von einem Montagerahmen 2 umgeben, welcher an der Rückseite des Gehäuses 1 in eine Montageplatte 3 eingreift. Auf diese Weise wird das Gehäuse 1 an den Montagemitteln, gebildet durch den Montagerahmen 2 und die Montageplatte 3, gehalten.

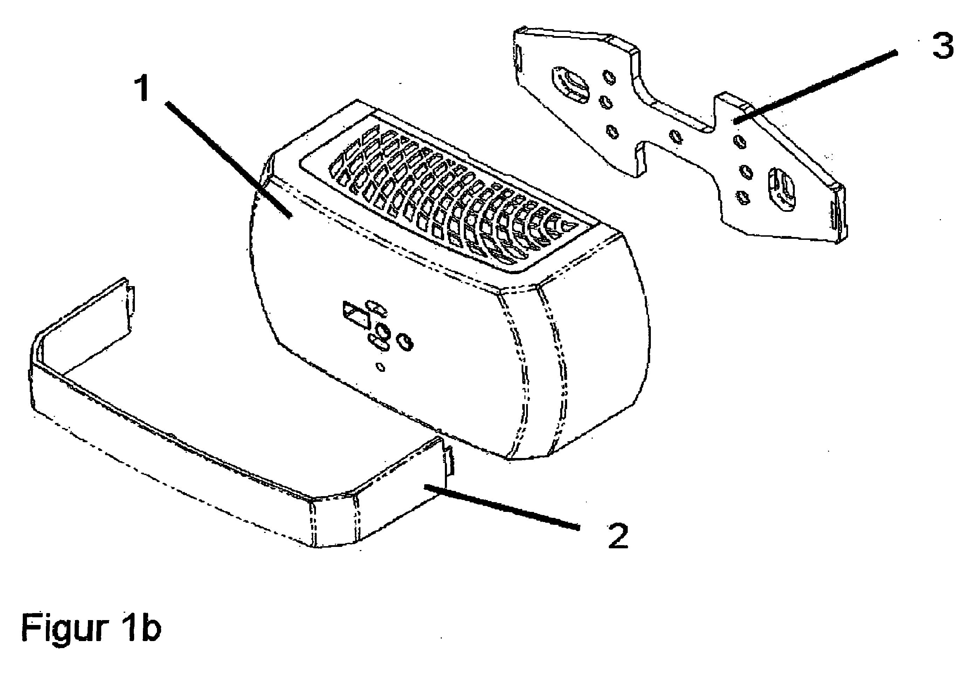

Figur 1b zeigt eine Explosionsdarstellung der Bestandteile Gehäuse 1, Montagerahmen 2 sowie Montageplatte 3.

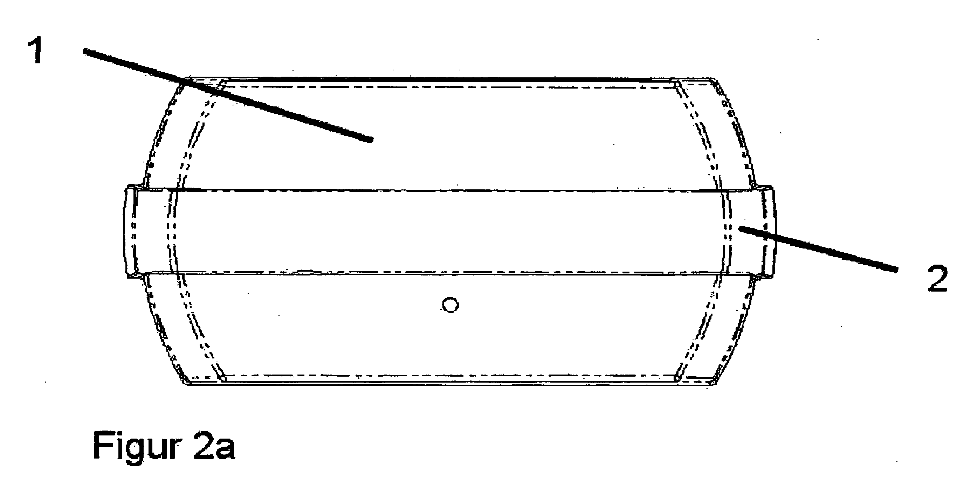

Figur 2a zeigt eine Frontalansicht der Anordnung nach Figur 1a. Das Gehäuse 1 weist an seiner rechten und linken Außenseite eine einem Kreissegment entsprechende Formgebung auf, wobei der Radius durch den Montagerahmen, insbesondere auf dessen Innenseite abgestimmt nachempfunden wird.

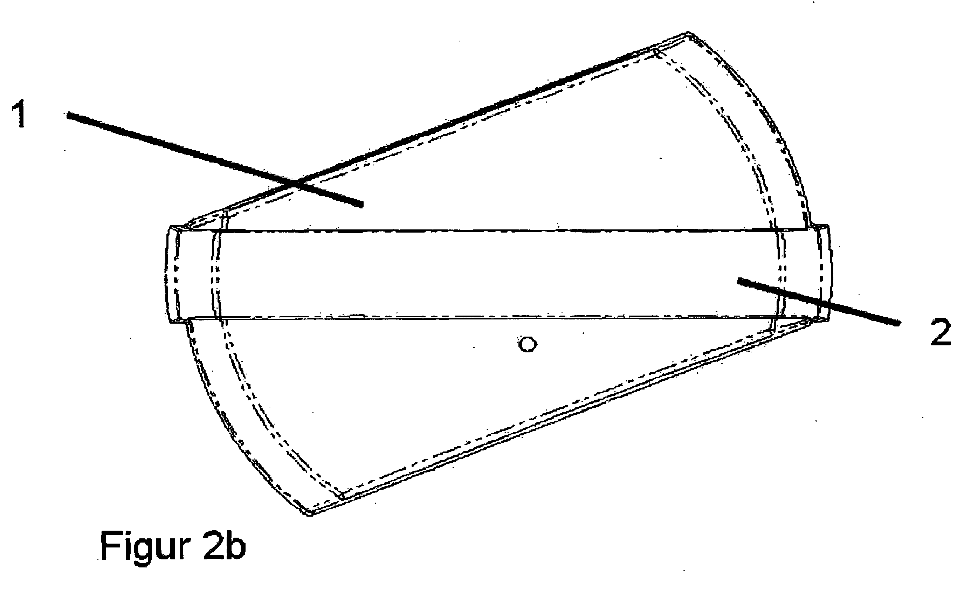

Figur 2b zeigt eine erste verschwenkte Position des Gehäuses 1 im Montagerahmen 2, wobei die Unterseite des Gehäuses, an welcher die zur Überwachung einer Tür benötigten Signale ausgesandt werden, vorliegend nach rechts verschwenkt dargestellt ist. Der Montagerahmen 2 fasst das Gehäuse 1 am Radius der linken bzw. rechten Seitenwand, so dass das Gehäuse 1 durch den Montagerahmen 2 mit der Montageplatte 3 (hier nicht dargestellt) als Montagemittel gehalten wird.

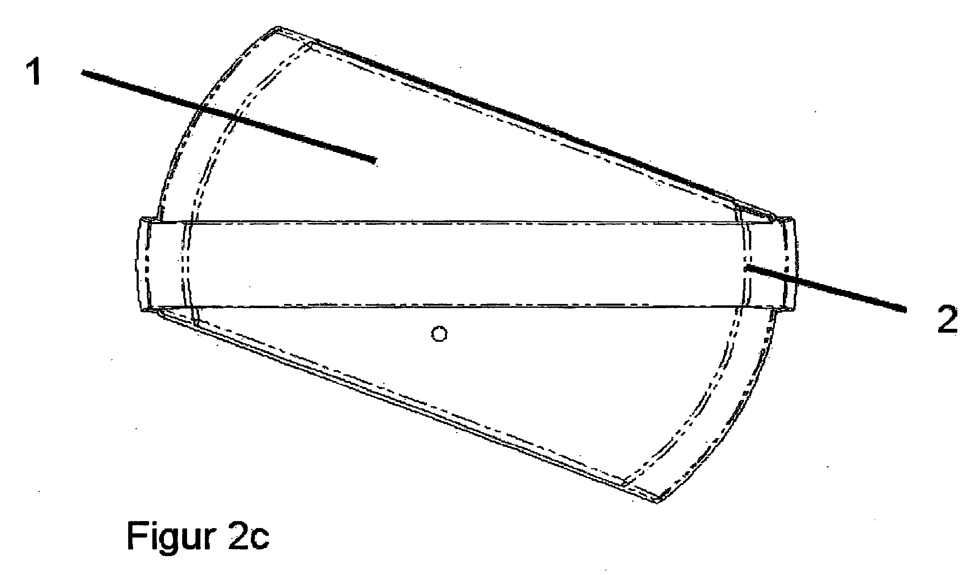

Figur 2c zeigt eine entsprechend nach links verschwenkte Anordnung der erfindungsgemäßen Vorrichtung zur Überwachung einer Tür.

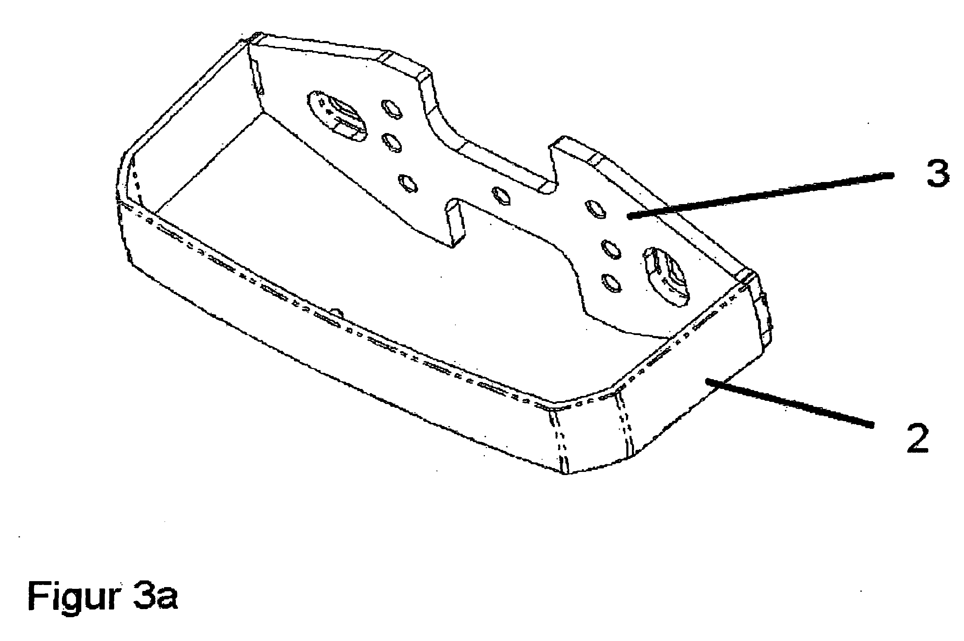

Figur 3a zeigt eine Darstellung der Montagemittel, bestehend aus Montagerahmen 2 und Montageplatte 3 ohne darin angeordnetes Gehäuse. Die Montagemittel werden durch Anbringung der Montageplatte 3 an einer Tür vormontiert, wonach das Gehäuse 1 mit dem darin enthaltenen 3D-Sensor in die Montagemittel eingebracht wird. Die Montageplatte ist für eine immer gleiche Montageposition, z. B. horizontale Position, vorgesehen.

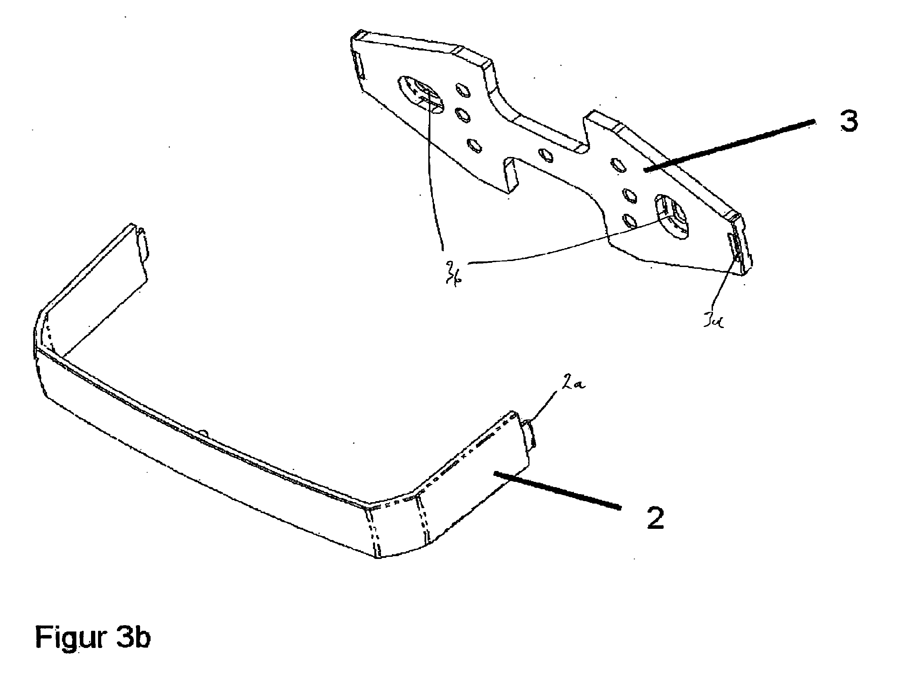

Figur 3b zeigt eine Explosionsdarstellung der Montagemittel gebildet aus Montagerahmen 2 und Montageplatte 3. Der Montagerahmen 2 weist hierbei an seinen der Montageplatte 3 zugewandten Enden Rasthaken 2a auf, welche in entsprechende Aufnahmen 3a an der Montageplatte 3 formschlüssig eingreifen. Die Montageplatte 3 verfügt des Weiteren über zwei Montagelanglöcher 3b, welche dem Installateur eine einfache und präzise Montage an einem Türblatt ermöglichen.

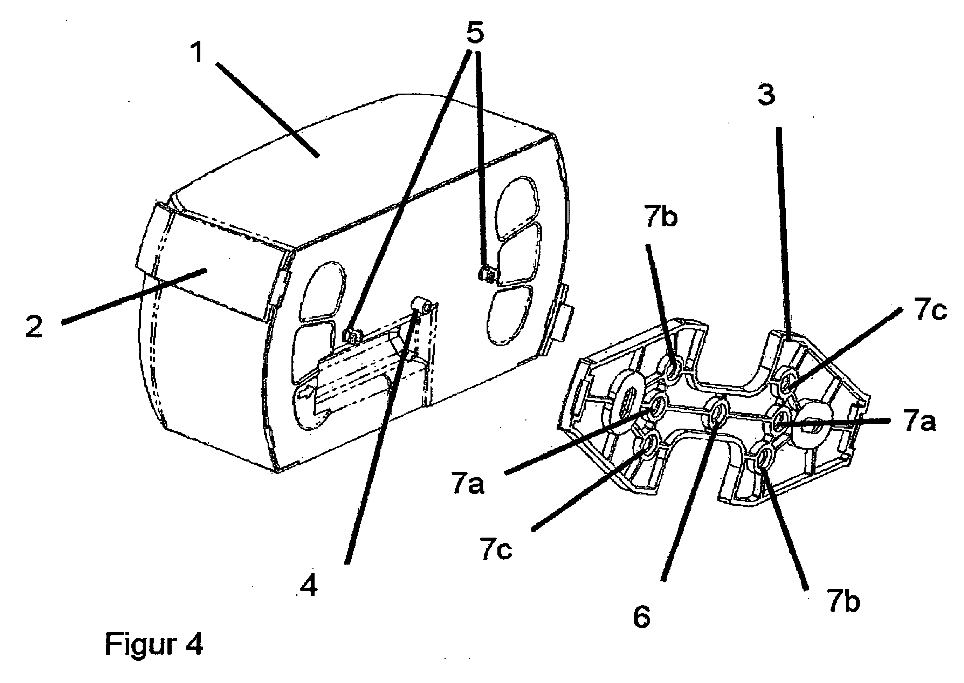

Figur 4 zeigt eine Explosionsdarstellung eines in einem Montagerahmen angeordneten Gehäuses 1. Das Gehäuse 1 weist hierbei auf seiner Rückseite eine Mehrzahl von erfindungsgemäßen Zapfen auf. Der vorhandene Mittelzapfen 4 ist dabei zentrisch im Radius des Gehäuses 1 angeordnet, so dass das Gehäuse 1 entsprechend der Figuren 2b und 2c um den Mittelzapfen 4 drehbar gelagert ist. Entlang einer horizontalen Richtung des Gehäuses 1 sind links sowie rechts vom Mittelzapfen 4 zwei Seitenzapfen 5 angeordnet, welche vorzugsweise über einrastende Spannmittel verfügen können.

Die dargestellte Montageplatte 3 weist in ihrem Zentrum eine zentrische Bohrung 6 für die Aufnahme des Mittelzapfens 4 auf.

Entsprechend den in Figur 2a bis 2c dargestellten Montagepositionen können die Seitenzapfen 5 in entsprechende Lagebohrungen eingebracht werden, wobei die Lagebohrungen stets diagonal gegenüberliegend rotationssymmetrisch um die zentrische Bohrung 6 angeordnet sind. So stellen die ersten Lagebohrungen 7a die horizontal ebene Montageposition dar. Die zweiten Lagebohrungen 7b entsprechen der in Figur 2b dargestellten Verschwenkung des Strahlengangs nach rechts, die dritten Lagebohrungen 7c entsprechen der Darstellung nach Figur 2c. Auf diese Weise steht dem Installateur ein einfaches vorgegebenes Raster zur Verfügung, welches die Montage der Vorrichtung zur Überwachung einer Tür erheblich vereinfacht, ohne dabei Nachteile in Bezug auf die Montagepräzision in Kauf zu nehmen.

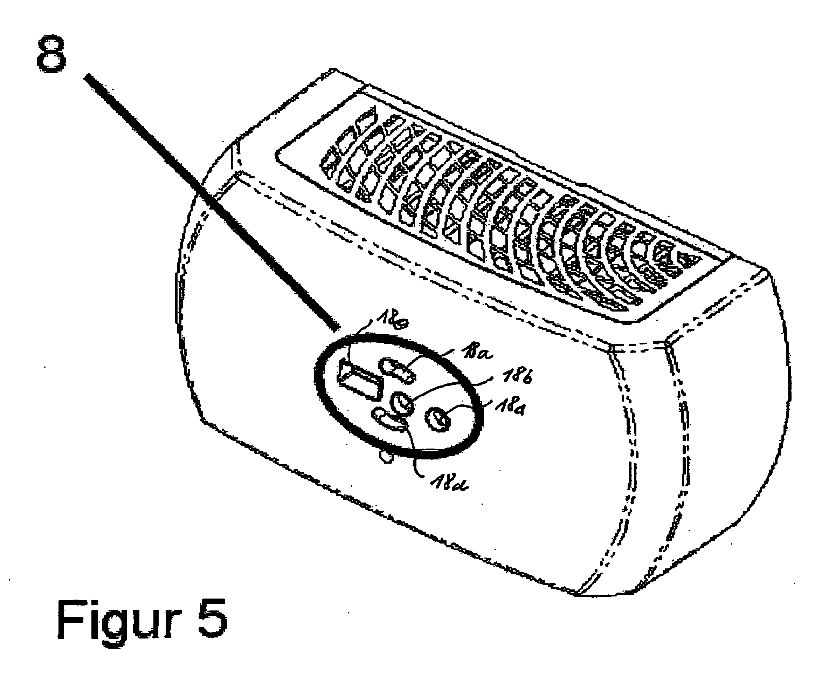

Figur 5 zeigt eine Darstellung eines Gehäuses 1 mit darin enthaltenem 3D-Sensor, wobei an der Vorderseite des Gehäuses 1 Bedienelemente, beispielsweise in Form von Potentiometern oder ähnlichem vorgesehen sind. Die Bedienelemente sind in einem Bedienelemente-Bereich 8 angeordnet, welcher an der Vorderseite des Gehäuses für den Installateur gut zugänglich angeordnet ist. Der Installateur kann Anpassungen, beispielsweise an die Montageposition vornehmen, und/oder durch entsprechende Justierparameter das Erfassungsfeld der Vorrichtung zur Überwachung einer Tür einstellen. Sobald der Montagerahmen 2 um das Gehäuse 1 angeordnet wird, deckt dieser den zentrischen Bereich 8 mit den Zugängen zu den Bedienelementen ab, wobei die Abdeckung in allen Montagepositionen zusätzlich eine Abdichtung darstellen kann.

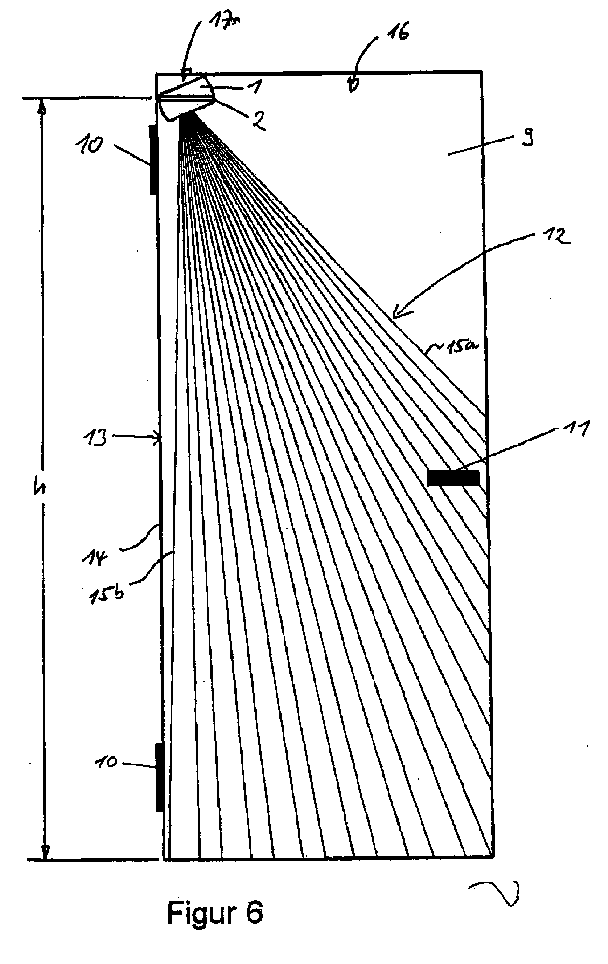

Figur 6 zeigt exemplarisch eine Anordnung eines erfindungsgemäßen 3D-Sensors als Vorrichtung zur Überwachung einer Tür, vorliegend einer einseitig angeschlagenen Flügeltüre 16. Das Gehäuse 1 ist hierbei mit dem Montagerahmen 2 in einem linken oberen Eckebereich 17 der Tür 16 angeordnet. Das Türblatt 9 ist hierbei linksseitig durch Beschläge 10 angeschlagen und weist rechtsseitig eine Türklinke 11 auf. Die Vorrichtung zur Überwachung einer Tür ist so ausgerichtet, dass sie entsprechend der Darstellung in Figur 2b einen nach rechts verschwenkten Erfassungsstrahlengang 12 mit einem äußeren Messstrahl 15a aufweist. Der Strahlengang ist auf der linken, den Beschlägen 10 zugewandten Seite derart ausgerichtet, dass ein Messstrahl 15b nahezu senkrecht zum Boden, also nahezu parallel entlang einer Türblattkante 14 einer Türblattseite 13 verläuft. Beim Verschwenken des Türblatts 9 wird somit keine Detektion von Wandelementen erfolgen, an welchen die Beschläge 10 angeordnet sind.

Das Gehäuse 1 ist an der Tür 16, z. B. in einer Höhe h montiert. Entsprechende Anordnungen sind sowohl zentrisch, als auch an der rechten oberen Seite, bei anders angeschlagenen Türen, denkbar. Zentrische Anordnungen können bei Doppelflügeltüren zweckmäßig sein. Gegebebebfalls wir das Gehäuse nicht an der Tür, sondern am Türramen oder der Wand befestigt.

Über die senkrechten Strahlen an der Türblattseite 13 lässt sich unter anderem auch die Höhe der Tür bestimmen, in dem die Abstandsmessung bis zum reflektierenden Untergrund erfolgt. Die Höhe der Tür ist hierbei unter Bezug einer definierten Montageposition der Montagemittel 2, 3 anzugeben, wobei dies beispielsweise durch Vorlage einer Montageschabione für die Türkante leicht durch den Installateur zu bewerkstelligen ist.

Zum Beispiel ist in der Vorrichtung ein Lagesensor vorgesehen, welcher die Orientierung entsprechend der Figuren 2a, 2b und 2c erfasst.

Alternativ zu den Lagersensoren sind auch entsprechende Sensoren denkbar, welche, beispielsweise über Drucktaster, die Seitenzapfen und/oder die Lagebohrungen 7a bis 7b überwachen, um daraus eine Orientierung der Vorrichtungsüberwachung einer Tür zu ermitteln.

Durch entsprechend angepasste Auswertebestandteile lassen sich auf diese Weise exakte Positionierungen einzelner Objekte im Gefahrenbereich der Tür ermitteln, ohne dass aufwendige hochpräzise Montageschritte bei der Anordnung der erfindungsgemäßen Vorrichtung vorgenommen werden müssen.

### Bezugszeichenliste

- 1: Gehäuse
- 2: Montagerahmen
- 2a: Rasthaken
- 3: Montageplatte
- 3a: Aufnahmen
- 3b: Montagelanglöcher
- 4: Mittelzapfen
- 5: Seitenzapfen
- 6: zentrische Bohrung
- 7a: erste Lagebohrungen
- 7b: zweite Lagebohrungen
- 7c: dritte Lagebohrungen
- 8: Bedienelemente-Bereich
- 9: Türblatt
- 10: Beschlag
- 11: Klinke Erfassungsstrahlengang
- 13: Türblattseite
- 14: Türblattkante
- 15a: Messstrahl
- 15b: Messstrahl
- 16: Flügeltüre
- 17: Eckbereich

## Patentansprüche

1. Vorrichtung zur Überwachung einer Tür mit einem 3-D-Sensor, der in der Lage ist, Distanzen zu einem Objekt im Überwachungsfeld als dritte Dimension zu erfassen, wobei der 3-D-Senscr in einem Gehäuse (1) angeordnet ist und wobei im Gehäuse (1) unbeweglich angeordnetes Sendemittel zum senden eines Messstrahls und Empfängemittel zum Empfangen eines reflektierten Messstrahls vorgesehen sind, **dadurch gekennzeichnet, dass** eine Steuereinheit vorgesehen ist, die dazu ausgelegt ist, eine Information über die Lage der Vorrichtung bezogen auf eine horizontale Grundmontageposition zu erhalten, und dass eine Auswertung des Messstrahls durch die Steuereinheit in Abhängigkeit der Lageinformation stattfindet und wobei die Steuereinheit dazu ausgelegt ist, durch Auswertung des Messstrahls in Abhängigkeit der Lageinformation eine Montagehöhe (h) der Vorrichtung nach einer Montage zu bestimmen sowie die Höhe (h) des Montageortes als Parameter für die Definition eines Überwachungsfeldes einzusetzen, indem der Sensor auf ein definiertes Überwachungsvolumen eingestellt wird.

2. Vorrichtung nach Anspruch 1, **dadurch gekennzeichnet, dass** Lageerkennungsmittel vorhanden sind, die dazu ausgebildet sind, eine Lage, insbesondere absolute Lage in Bezug auf eine Horizontale des Gehäuses, automatisch zu erfassen und an eine Steuereinheit weiterzuleiten.

3. Vorrichtung nach einem der vorhergehenden Ansprüche, **dadurch gekennzeichnet, dass** die Vorrichtung für eine Anbringung in einer horizontalen Grundmontageposition und für die Anbringung in wenigstens zwei weiteren unterschiedlichen Montagepostionen bezogen auf die horizontale Grundmontageposition ausgelegt ist, wobei Montagemittel (2,3) für das Gehäuse (1) für eine immer gleiche Montageausrichtung unabhängig von der Montageposition des Gehäuses (1) ausgebildet sind und wobei die Montagemittel (2,3) und das Gehäuse (1) derart aufeinander abgestimmt sind, dass eine eindeutige Ausrichtung des Gehäuses (1) an den Montagemitteln (2,3) in den jeweils wenigstens zwei weiteren Montagepositionen durch die Montagemittel (2,3) gewährleistet ist.

4. Vorrichtung nach einem der vorhergehenden Ansprüche, **dadurch gekennzeichnet, dass** die wenigstens zwei weiteren Montagepositionen eine Anordnung der Vorrichtung in einem Eckbereich einer zur überwachenden Tür (16) betreffen, wobei die Montagemittel (2,3) eine verkippte Anbringung des Gehäuses (1) für einen Eckbereich (17) mit einer Ausrichtung des 3-D-Sensors zur überwachenden Tür (16) nur so zulassen, dass ein begrenzender Überwachungsstrahl (15b) eines Überwachungsfeldes (12) zumindest annähernd parallel zu einer Türkante (14) der zu überwachenden Tür (16) verläuft.

5. Vorrichtung nach einem der vorhergehenden Ansprüche, **dadurch gekennzeichnet, dass** die Montagemittel (2,3) nur genau drei Montagepositionen des Gehäuses (1) zulassen.

6. Vorrichtung nach einem der vorhergehenden Ansprüche, **dadurch gekennzeichnet, dass** die Montagemittel (2,3) einen Rahmen (2) umfassen, der das Gehäuse umschließt.

7. Vorrichtung nach einem der vorhergehenden Ansprüche, **dadurch gekennzeichnet, dass** der 3-D-Sensor in einem Gehäuse (1) ein Empfängerfeld und/oder ein Senderfeld umfasst.

8. Vorrichtung nach einem der vorgenannten Ansprüche, **dadurch gekennzeichnet, dass** der 3-D-Sensor ein bildgebender sensor ist, bei welchem ein Objektpunkt auf einem zugeordneten Sensorpunkt abgebildet wird.

## Claims

1. Device for monitoring a door with a 3D sensor which is able to detect distances from an object in the monitoring field as the third dimension, wherein the 3D sensor is arranged in a housing (1), and wherein immovably arranged transmission means for transmitting a measurement beam and receiver means for receiving a reflected measurement beam are provided in the housing (1), **characterised in that** a control unit is provided which is designed to obtain information relating to the position of the device relative to a horizontal basic mounting position, and **in that** the measurement beam is evaluated by the control unit as a function of the position information, and wherein the control unit is set up to determine a mounting height (h) of the device after assembly by evaluating the measurement beam as a function of the position of the position information, and to use the height (h) of the assembly site as a parameter for the definition of a monitoring field, **in that** the sensor is adjusted to a defined monitoring volume.

2. Device according to claim 1, **characterised in that** position detection means are provided which are designed to automatically detect a position, in particular an absolute position relative to a horizontal of the housing, and to forward said position to a control unit.

3. Device according to any one of the preceding claims, **characterised in that** the device is designed to be fitted in a horizontal basic mounting position and to be fitted in at least two further different mounting positions relative to the horizontal basic mounting position, mounting means (2, 3) for the housing (1) being designed for a mounting orientation which is always the same irrespective of the mounting position of the housing (1), and the mounting means (2, 3) and the housing (1) being matched to one another in such a manner that a unique orientation of the housing (1) on the mounting means (2, 3) in the respective at least two further mounting positions is ensured by the mounting means (2, 3).

4. Device according to any one of the preceding claims, **characterised in that** the at least two further mounting positions relate to an arrangement of the device in a corner area of a door (16) to be monitored, the mounting means (2, 3) allowing the housing (1) for a corner area (17) to be fitted in a tilted manner with an orientation of the 3D sensor relative to the door to be monitored (16) only in such a manner that a limiting monitoring beam (15b) of a monitoring field (12) runs at least approximately parallel to an edge (14) of the door (16) to be monitored.

5. Device according to any one of the preceding claims, **characterised in that** the mounting means (2, 3) allow only exactly three mounting positions of the housing (1).

6. Device according to any one of the preceding claims, **characterised in that** the mounting means (2, 3) comprise a frame (2) which surrounds the housing.

7. Device according to any one of the preceding claims, **characterised in that** the 3D sensor in a housing (1) comprises a receiver field and/or a transmitter field.

8. Device according to any one of the preceding claims, **characterised in that** the 3D sensor is an imaging sensor with which an object point is imaged onto an assigned sensor point.

## Revendications

1. Dispositif pour surveiller une porte à l'aide d'un capteur 3D, qui est à même de capter, en tant que troisième dimension, les distances à un objet situé dans la zone de surveillance, le capteur 3D étant disposé dans un boîtier (1), et dans lequel sont prévus un moyen émetteur disposé à demeure dans le boîtier (1), pour émettre un faisceau de mesure, et des moyens récepteurs, destinés à recevoir un faisceau de mesure réfléchi, **caractérisé en ce qu'**une unité de commande est prévue, qui est configurée de façon à obtenir une information quant à la position du dispositif par rapport à une position horizontale de montage de base, et qu'une évaluation du faisceau de mesure a lieu par l'unité de commande en fonction de l'information de position, et l'unité de commande étant configurée de façon, par évaluation du faisceau de mesure en fonction de l'information de position, à déterminer une hauteur de montage (h) du dispositif après un montage, et à utiliser la hauteur (h) du point de montage en tant que paramètre pour la définition d'une zone de surveillance, le capteur étant ajusté à un volume de surveillance défini.

2. Dispositif selon la revendication 1, **caractérisé en ce que** des moyens de reconnaissance de position sont présents, qui sont configurés de façon à capter automatiquement une position, en particulier une position absolue par rapport à une horizontale du boîtier, et à la transférer à une unité de commande.

3. Dispositif selon l'une des revendications précédentes, **caractérisé en ce que** le dispositif est configuré pour être arrangé dans une position horizontale de montage de base et pour être arrangé dans au moins deux autres positions de montage différentes, par rapport à la position horizontale de montage de base, des moyens de montage (2, 3) pour le boîtier (1) étant configurés pour une orientation de montage toujours identique, indépendamment de la position de montage du boîtier (1), et les moyens de montage (2, 3) et le boîtier (1) étant adaptés l'un à l'autre de telle sorte que l'on soit assuré, grâce aux moyens de montage (2, 3), d'une orientation non ambiguë du boîtier (1) par rapport aux moyens de montage (2, 3) dans les au moins deux autres positions de montage correspondantes.

4. Dispositif selon l'une des revendications précédentes, **caractérisé en ce que** les au moins deux autres positions de montage concernent un arrangement du dispositif dans une zone d'angle d'une porte (16) à surveiller, les moyens de montage (2, 3) n'autorisant une mise en place inclinée du boîtier (1) pour une zone d'angle (17), avec une certaine orientation du capteur 3D par rapport à la porte (16) à surveiller, que de telle sorte qu'un faisceau de surveillance limitatif (15b) d'une zone de surveillance (12) soit au moins approximativement parallèle à une arête (14) de la porte (16) à surveiller.

5. Dispositif selon l'une des revendications précédentes, **caractérisé en ce que** les moyens de montage (2, 3) ne permettent avec précision que trois positions de montage du boîtier (1).

6. Dispositif selon l'une des revendications précédentes, **caractérisé en ce que** les moyens de montage (2, 3) comprennent un cadre (2), qui renferme le boîtier.

7. Dispositif selon l'une des revendications précédentes, **caractérisé en ce que** le capteur 3D comprend, dans un boîtier (1), une zone de réception et/ou une zone d'émission.

8. Dispositif selon l'une des revendications précédentes, **caractérisé en ce que** le capteur 3D est un capteur imageur, dans lequel un point objet est imagé sur un point capteur qui lui est affecté.
